# NEUE EUROPÄISCHE PATENTSCHRIFT

(11) **EP 0 962 298 B2**
(45) Veröffentlichungstag und Bekanntmachung des Hinweises auf die Entscheidung über den Einspruch: **19.04.2006**
(45) Hinweis auf die Patenterteilung: 19.09.2001
(21) Anmeldenummer: 99110444.9
(22) Anmeldetag: 29.05.1999
(51) Int. Cl.: B29C 47/08

(54) **Getriebe für einen Doppelwellenextruder**
Drive for twin screw extruder
Transmission pour extrudeuse à deux vis

(30) Priorität: 04.06.1998 DE 19824866
(43) Veröffentlichungstag der Anmeldung: 08.12.1999
(73) Patentinhaber: A. Friedr. Flender GmbH, 46395 Bocholt (DE)
(72) Erfinder: Böing, Alfons, 46395 Bocholt (DE); Morhard, Hans Joachim, 46395 Bocholt (DE)
(74) Vertreter: Radünz, Ingo

(56) Entgegenhaltungen:
- DE-C- 3 814 211
- GB-A- 2 089 597
- US-A- 3 580 389

## Beschreibung

Die Erfindung betrifft ein Getriebe für einen Doppelwellenextruder mit den Merkmalen des Oberbegriffes des Patentanspruches 1.

Derartige Doppelwellenextruder-Getriebe bestehen im wesentlichen aus einem Reduktionsgetriebe und dem eigentlichen Verteilergetriebe, das eine Übersetzung i = 1 aufweist.

In dem Reduktionsgetriebe wird die hohe Motordrehzahl auf die erforderliche Drehzahl des Extruders reduziert. Das Reduktionsgetriebe eines bekannten Doppelwellenextruder-Getriebes (EP-OS 716 914) ist als Stirnradgetriebe ausgebildet.

Bei bekannten Doppelwellenextruder-Getrieben erfolgt der Antrieb über einen Drehstrommotor mit fester Drehzahl. Über eine in dem Reduktionsgetriebe integrierte Schalteinheit ist es möglich, zwei feste Abtriebsdrehzahlen am Verteilergetriebe zu erreichen, um die für den Extrudierbetrieb augenblicklich geforderte Drehzahl zumindest stufenweise einstellen zu können. Der erforderliche Stellbereich für die Schneckenwellen des Extruders von R = n₂ₘₐₓ/n₂ₘᵢₙ ist relativ klein und liegt in der Größenordnung von R = 1,1 bis 1,2. Trotz des geringen Stellbereiches bereitet eine Drehzahlverstellung bei großen Extruderleistungen von mehr als 10000 kW Schwierigkeiten. So ist eine mechanische Schalteinrichtung bei Doppelwellenextruder-Getrieben für diesen Leistungsbereich nicht unproblematisch. Eine dazu alternative, stufenlose Drehzahlverstellung über den Motor (in Frage kommt ein Gleichstrommotor) ist für diesen Leistungsbereich aufwendig und teuer. Außerdem ist ein Hilfsantrieb für die geforderte Kriechdrehzahl erforderlich. DE 3 814 211 zeigt ein solches Getriebe.

In dem Verteilergetriebe sind die beiden Abtriebswellen des Doppelwellenextruder-Getriebes zum Antrieb der gleich- oder gegensinnig drehenden Extruderwellen angeordnet. Hierbei ist eine der Abtriebswellen direkt mit dem Reduktionsgetriebe gekuppelt. Der bezogen auf die hohe Belastung der Bauteile kleine Achsabstand der beiden Abtriebswellen erfordert eine Leistungsverzweigung, bei der der leistungsbedarf der zweiten Abtriebswelle über Stirnräder auf zwei Verteilerwellen aufgeteilt und anschließend wieder zusammengefaßt wird. Durch diese Leistungsverzweigung brauchen die Zahneingriffe der Stirnräder lediglich auf eine Viertel der Gesamtleisung ausgelegt zu werden. Des weiteren sind in dem Verteilergetriebe die beiden AxiallagerzurAufnahme dersehr hohen Axialkräfte aus dem Extrudierprozeß angeordnet.

Bei den bekannten Doppelwellenextruder-Getrieben (EP-OS 716 914) sind die Verteilergetriebe als Stirnradgetriebe ausgebildet. Aus der DE-OS 37 34 578 ist ein Doppelwellenextruder-Getriebe bekannt, bei dem das Verteilergetriebe als Planetengetriebe ausgebildet ist, an das sich die Übersetzungsstufen des Reduktionsgetriebes anschließen. Als Übersetzungsstufen sind als Stirnradgetriebe verwendet.

Ein weiteres Verteilergetriebe ist aus der DE-PS 34 18 543 bekannt Bei diesem Stimradgetriebe ist die leistungsaufnehmende Welle axial frei einstellbar und trägt zwei entgegengesetzt verzahnte Zahnritzel.

Weiterhin sind sogenannte Überlagerungsgetriebe bekannt, die im Zweimotorenantrieb eine stufenlose Drehzahlverstellung ohne den Einsatz von mechanischen Schalteinrichtungen ermöglichen. Hierbei werden in einem Planetengetriebe zwei Drehzahlanteileunter Berücksichtigung der inneren Übersetzung iₒ des Planetengetriebes und der Drehrichtung des Sonnenrades und Hohlrades - addiert oder subtrahiert. Bei einer Präsentation am 17.3.1998 bei der Firma Phillips Petroleum (Houston, USA) wurde durch die Firma Renk ein Getriebe mit einem Hauptmotor und einem Überlagerungsmotor für einen Doppelwellenextruder, wobei das Getriebe aus einem Reduktionsgetriebe und einem Verteilergetriebe besteht und das Verteilergetriebe eine erste, über das Reduktionsgetriebe unmittelbar angetriebene Abtriebswelle und eine zweite, über die erste Abtriebswelle und über zwei beidseitig angeordnete Verteilerwellen angetriebene Abtriebswelle aufweist, und wobei der Hauptmotor mit fester Drehzahl betrieben wird und auf einen Grossteil der Gesamtleistung und der Überlagerungsmotor auf einen Bruchteil von ungefähr 30% der Gesamtleistung ausgelegt ist, wobei das Reduktionsgetriebe als zweistufiges Planetengetriebe ausgebildet ist, dessen erstes Sonnenrad über den Hauptmotor und dessen erstes Hohlrad über den Überlagerungsmotor angetrieben ist und dessen zweiter Planetenträger mit der ersten Abtriebswelle des Verteilergetriebes verbunden ist und wobei der Überlagerungsmotor in der Drehzahl regelbar ist oder in Stufen verstellbar ist, vorgestellt.

Der Erfindung liegt die Aufgabe zugrunde, das gattungsgemäße Getriebe so zu gestalten, daß bei großen Leistungen von beispielsweise mehr als 10000 kW eine Drehzahlregelung der Abtriebswellen unter vertretbarem Aufwand möglich ist.

Diese Aufgabe wird bei einem gattungsgemäßen Getriebe erfindungsgemäß durch die kennzeichnenden Merkmale des Patentanspruches 1 gelöst Vorteilhafte Ausgestaltungen der Erfindung sind Gegenstand der Unteransprüche.

Bei dem erfindungsgemäßen Getriebe wird ein an sich bekanntes Überlägerungsgetrfebe als Reduktionsgetriebe verwendet, das das bisher benutzte Stirnradgetriebe ersetzt. Dieses Überlagerungsgetriebe ist an die Anforderungen eines Doppelwellenextruder Ge triebes in der Weise angepaßt, daß von den beiden Drehzahlanteilen des Überlagerungsgetriebes einer konstant und der andere in seiner Drehzahl variabel ist. Durch die Wahl der Parameter ist es möglich, den Großteil des gesamten Leistungsbedarfes des Extruders über den Hauptmotor zu leiten. Dabei kann als Hauptmotor ein Drehstrommotor mit fester Drehzahl verwendet werden, der vergleichsweise wenig aufwendig ist. Der Überlagerungsmotor wird einschließlich der Regelung nur für einen Bruchteil der Gesamtleistung ausgelegt. Als Überlagerungsmotor kann daher ein Gleichstrommotor oder ein frequenzgeregelter Drehstrommotor verwendet werden, der in der Drehzahl stufenlos verstellbar ist. Auch der Einsatz eines mehrfach polumschaltbaren Drehstrommotors ist möglich. Wenn beispielsweise an den mit den Abtriebswellen gekuppelten Extruderwellen ein Stellbereich von R = n₂ₘₐₓ/n₂ₘᵢₙ = 1,1 ausreicht und der Überlagerungsmotor mit einem Stellbereich von Rᵥ = n_{Mmax}/n_{Mmin} = 10 betrieben werden kann, so beträgt das Verhältnis P_{ges}/Pᵥ = ca. 10. Das heißt bei einem Gesamtleistungsbedarf von P_{ges} = 10000 kW muß der Überlagerungsmotor für eine Leistung von Pᵥ = 1000 kW bei maximaler Motordrehzahl und T_{M} = const. ausgelegt werden. Je kleiner der Stellbereich R an den Abtriebswellen und je größer der Stellbereich Rᵥ des Überlagerungsmotors vorgegeben werden kann, desto größer wird das Verhältnis P_{ges}/Pᵥ und damit desto kleiner der Überlagerungsmotor.

Neben der Überlagerung der Drehzahlen ist ein weiterer wesentlicher Vorteil von Planetengetrieben gegenüber den bisher für Doppelwellenextruder-Getrieben verwendeten Stimradgetrieben die innere Leistungsverzweigung. Die eingeleitete Leistung wird auf z. B. drei Planetenräder verzweigt, so daß die einzelnen Zahneingriffe nur für ein Drittel des Gesamtleitung (Teilwälzleistung) dimensioniert werden können. Gegenüber den bisher verwendeten Stimradgetrieben baut damit das erfindungsgemäß eingesetzte Planetengetriebe bei vergleichbarer Betriebssicherheit wesentlich kleiner und leichter.

Ein Ausführungsbeispiel der Erfindung ist in der Zeichnung dargestellt und wird im folgenden näher erläutert. Es zeigen:

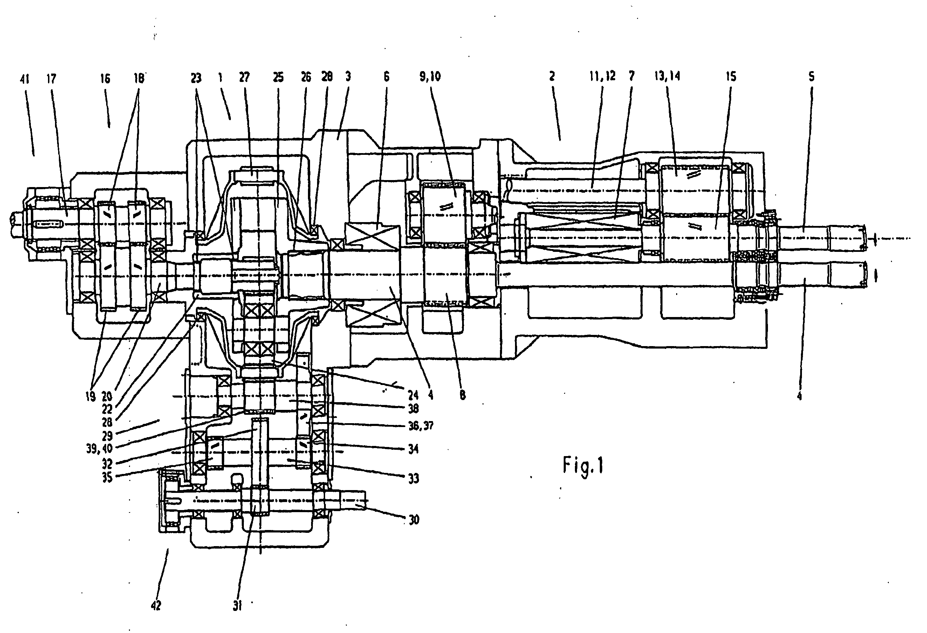

- Fig. 1: den Längsschnitt durch ein Getriebe für einen Doppelwellenextruder,
- Fig. 2 bis 4: jeweils einen Räderplan und
- Fig. 5: ein Ende der Antriebswelle.

Das Getriebe für einen nicht gezeigten Doppelwellenextruder besteht aus einen Reduktionsgetriebe 1 und einem Verteilergetriebe 2, die in einem mehrteiligen Getriebegehäuse 3 angeordnet sind. Das Verteilergetriebe 2 weist eine erste Abtriebswelle 4 und eine zweite Abtriebswelle 5 auf, die mit den Extruderwellen des Doppelwellenextruders gekuppelt werden. Zur Aufnahme der Kräfte aus dem Extrudierprozeß, die als Axialkräfte auf die Extruderwellen und die Abtriebswellen 4, 5 wirken, sind die Abtriebswellen 4, 5 über Axiallager 6, 7 in dem Getriebegehäuse 3 abgestützt.

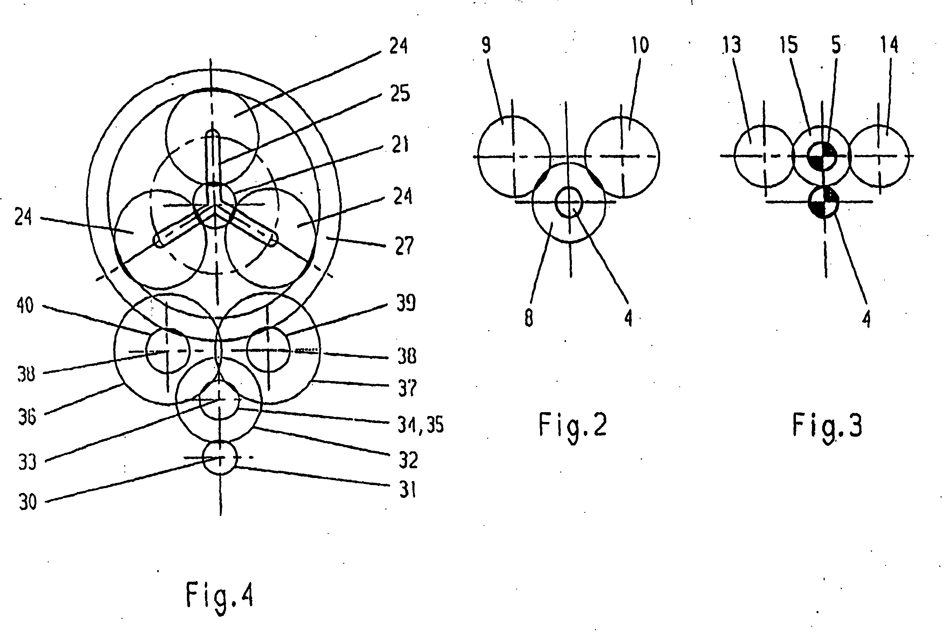

Die erste Abtriebswelle 4 ist auf die später beschriebene Weise mit dem Reduktionsgetriebe 1 direkt verbunden. Sie trägt ferner ein Zahnrad 8, das gemäß dem in Fig. 2 dargestellten Räderplan mit zwei Zahnrädern 9, 10 kämmt, von denen jeweils eines auf einer von zwei parallel nebeneinander angeordneten Verteilerwellen 11, 12 befestigt ist. Die Verteilerwellen 11, 12 tragen an ihrem anderem Ende jeweils ein Zahnrad 13,14. Die beiden Zahnräder 13, 14 kämmen gemäß dem in Fig. 3 gezeigten Räderplan mit einem Zahnrad 15, das auf der zweiten Abtriebswelle 5 angeordnet ist. Bei dieser Radanordnung, rotieren die Abtriebswellen 4, 5 gleichsinnig. Wird zwischen das Zahnrad 8 und die Zahnräder 9, 10 ein Zwischenzahnrad eingebaut, so läßt sich ein gegensinniger Lauf der Abtriebswellen 4, 5 erreichen.

Das Reduktionsgetriebe 1 ist als einstufiges Planetengetriebe ausgebildet. Dem Planetengetriebe kann ein als Stimradstufe 16 ausgebildetes Vorgetriebe vorgeschaltet sein. Die Stimradstufe 16 enthält eine Antriebswelle 17, an die ein nicht gezeigter Drehstrommotor angeschlossen, der als Hauptmotor dient. Auf der Antriebswelle 17 sind zwei Zahnritzel 18 angeordnet, die mit einer einander entgegengesetzten Schrägverzahnung versehen sind. Jedes Zahnritzel 18 steht mit einem Zahnrad 19 in Eingriff, die auf einer Ausgangswelle 20 angeordnet sind. Die über die Antriebswelle 17 eingeleitete Leistung wird verzweigt, so daß die Zahneingriffskräfte halbiert werden. Eine gleichmäßige Lastaufteilung wird durch ein axiales Verschieben der Ausgangswelle 20 mit den beiden Zahnrädern 19 erreicht. Dieser Einstellvorgang stellt sich automatisch ein.

Das einstufige Planetengetriebe enthält ein Sonnenrad 21, das je nachdem ob eine Stimradstufe 16 vorgesehen ist oder nicht mit der Ausgangswelle 20 der Stimradstufe 16 oder direkt mit der Antriebswelle 17 verbunden ist. Das Sonnenrad 21 Ist radial ungelagert. Die Verbindung des Sonnenrades 21 mit der Antriebswelle 17 oder der Ausgangswelle 20 erfolgt über ein Doppelgelenk-Zahnkupplung 22 mit zwei Verzahnungen 23, die auf den rotierenden Teilen als Bogenverzahnung ausgebildet sind.

Das Sonnenrad 21 ist außenverzahnt und steht mit drei Planetenrädern 24 in Eingriff, die gleichmäßig verteilt in einem Planetenträger 25 angeordnet sind. Der Planetenträger 25 ist mit der ersten Abtriebswelle 4 des Verteilergetriebes 2 über eine Verzahnung 26 unmittelbar verbunden.

Da das Sonnenrad 21 ungelagert ist, kann es sich durch eine achsparallele Verlagerung im um-Bereich von der theoretischen Getriebemitte in den Verzahnungen der Planetenräder 24 zentrieren und somit in den drei Zahneingriffen eine gleichmäßige Kraftübertragung gewährleisten. Dieser Vorgang stellt sich automatisch ein.

Das Planetengetriebe enthält weiterhin ein Hohlrad 27, das mit einer Innenverzahnung und einer Außenverzahnung versehen und über Lager 28 in dem Getriebegehäuse 3 drehbar gelagert ist. In die Innenverzahnung des Hohlrades 27 greifen die Planetenräder 24 ein.

Das Hohlrad 27 wird vorzugsweise über ein mit einer Leistungsverzweigung versehene Getriebe 29 durch einen Überlagerungsmotor angetrieben. Der nicht gezeigte Überlagerungsmotor ist mit einer Antriebswelle 30 verbunden. Die Antriebswelle 30 trägt ein Zahnritzel 31, das In ein Zahnrad 32 einer ersten Zwischenwelle 33 eingreift. Die erste Zwischenwelle 33 Ist axial verschiebbar in dem Getriebegehäuse 3 gelagert und trägt zwei Zahnritzel 34, 35, die mit einer einander entgegengesetzten Schrägverzahnung versehen sind. Die Zahnritzel 34, 35 greifen jeweils In zwei Zahnräder 36, 37 ein, die paarweise auf zwei zweiten Zwischenwellen 38 angeordnet sind. Jede zweite Zwischenwelle 38 trägt zwischen den Zahnrädern 36, 37 ein Zahnritzel 39, 40. Diese beiden Zahnritzel 39, 40 greifen in die Außenverzahnung des Hohlrad 27 ein. Die so entstandene Radanordnung ist aus dem Räderplan gemäß Fig. 4 ersichtlich. Sie ist an dieser Stelle vorteilhaft, da das Drehmoment am Hohlrad 27 nahezu dem am Planetenträger 25 entspricht und lediglich im Verhältnis der Übersetzung iₒ/(iₒ+1) kleiner ist. Auch hier ermöglicht die axial verschiebbare Zwischenwelle 33 mit den beiden Zahnritzeln 34, 35 eine gleichmäßige Lastaufteilung, so daß die Zahneingriffskräfte halbiert werden. Dieser Vorgang stellt sich automatisch ein.

Das einstufig ausgebildete Planetentgetriebe dient als Überlagerungsgetriebe und übernimmt gleichzeitig die Aufgabe der Reduktion der Drehzahl der Abtriebswellen 4, 5. Dabei ist mit der unmittelbaren Verbindung des Planetenträgers 25 mit der ersten Abtriebswelle 4 auf eine weitere Reduktionssufe hinter dem einstufigen Planetentgetriebe verzichtet worden.

Die Übersetzung iₒ des Planetengetriebes wird entsprechend der Drehzahl des Hauptmotors ausgelegt. Hierbei wird das Hohlrad 27 nicht verändert. Eine weitere Möglichkeit der Drehzahlanpassung wird durch die zusätzliche Anordnung der Stimradstufe 16 zwischen dem Hauptmotor und dem Sonnenrad 21 erreicht. Hierbei wird die Übersetzung der Stirnradstufe 16 entsprechend der Drehzahl des Hauptmotors ausgelegt. Die Übersetzung iₒ des Planetengetriebes bleibt unverändert.

Der Hauptmotor deckt den Großteil des Leistungsbedarfes und ist ein Drehstrommotor mit fester Drehzahl. Der Überlagerungsmotor ist auf ein Bruchteil des Leistungsbedarfes ausgelegt und ist ein Gleichstrommotor oder ein frequenzgeregelter Drehstrommotor mit einer stufenlosen Drehzahlregelung. Hierdurch ergibt sich innerhalb eines Stellbereiches von R = 1,1 bis 1,2 am Getriebeausgang eine stufenlos variable Ausgangsdrehzahl der Abtriebswellen 4, 5. Anstelle eines stufenlos regelbaren Überlagerungsmotors kann auch ein Überlagerungsmotor mit Polumschaltung verwendet werden. Mit einem solchen polumschaltbaren Drehstrommotor mit Drehzahlen von z. B. n_{M} 500/1000/1500 min⁻¹ kann bei motorischem und generatorischem Betrieb und gebremster Null-Stellung über den kleine Stellbereich von R = 1,1 und bei einem Verhältnis P_{ges}/Pᵥ = ca. 24 mit sieben gleichmäßig verteilten Abtriebdrehzahlen ein quasi stufenloser Betrieb erreicht werden. Ein generatorischer Betrieb des Überlagerungsmotors ist jedoch in vielen Anwendungsfällen wegen der damit verbundenen Rückspelsung von elektrischer Energie in das öffentliche Netz unerwünscht.

An den beiden Antriebswellen 17, 30 sind Rücklaufsperren 41, 42 vorgesehen. Diese Rücklaufsperren 41, 42 ermöglichen den Betrieb mit nur einem der beiden Motoren. Wird nur der Hauptmotor betätigt, so laufen die Abtriebswellen 4, 5 mit einer durch den Hauptmotor und die Übersetzung des Reduktionsgetriebes 1 und - falls vorhanden - der Stimradstufe 16 vorgegebenen festen Drehzahl um. Das überlagerte Planetengetriebe wird dadurch bei stillstehendem Überlagerungsgetriebe zu einem Planeten-Standgetriebe. Bei einer alleinigen Betätigung des Überlagerungsmotors wird eine Kriechdrehzahl ermöglicht, die zum Einstellen und Einrichten des Extrudierbetriebes benötigt wird. Der Überlagerungsmotor ersetzt in diesem Fall den bei den bekannten Doppelwellenextruder-Getrieben vorhandenen zusätzlichen Hilfsantrieb. Bei Verwendung einer Rücklaufsperre 41 an der Antriebswelle 17 kann der Überlagerungsmotor auch zum Anfahren des Getriebes eingesetzt werden. Dabei wird nach Erreichen einer bestimmten Drehzahl der Hauptmotor zugeschaltet. Die Rücklaufsperren 41, 42 lassen nur einen motorischen und keinen generatorischen Betrieb des Überlagerungsmotors zu.

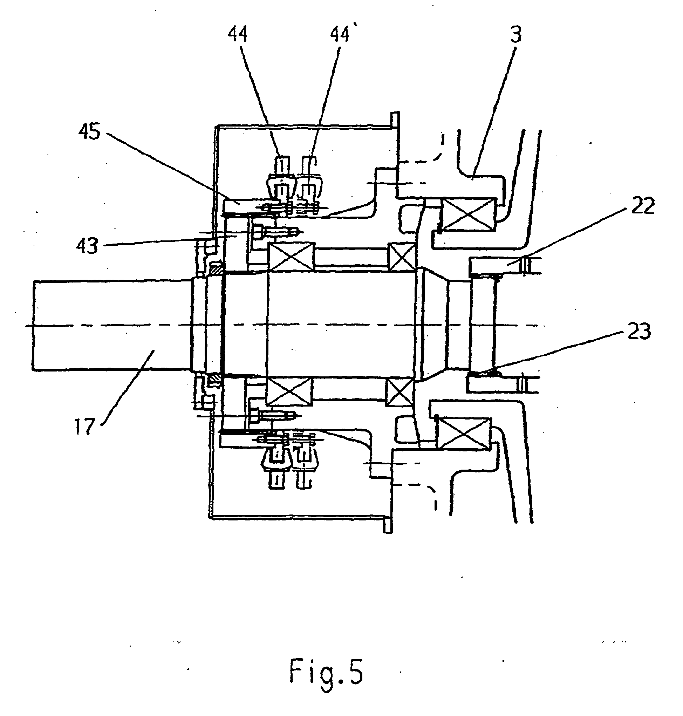

Anstelle der Rücklaufsperren 41, 42 kann an der an den Hauptmotor angeschlossenen Antriebswelle 17 eine Schaltkupplung angebracht werden. Die an den Überlagerungsmotor angeschlossene Antriebswelle 30 ist In diesem Fall mit einer Rücklaufsperre 42 oder einer Haltebremse zu versehen. Wie in Fig. 5 gezeigt ist, besteht die Schaltkupplung aus einer mit der Antriebswelle drehfest verbundenen Scheibe 43. Die der Antriebswelle 17 abgewandte Stimfläche der Scheibe 43 ist mit einer Verzahnung versehen, die mit einer gleichartige Verzahnung auf einen benachbarten Abschnitt des Getriebegehäuse 3 fluchtet. Über einen Schalthebel 44 ist in der Verzahnung eine Hülse 45 derart verschiebbar, daß die Hülse 45 in der einen Endstellung die Scheibe 43 und den Abschnitt des Getriebegehäuse 3 überbrückt. In dieser Stellung, die in Fig. 5 dargestellt ist, ist die Antriebswelle 17 über die Scheibe 43 und die Hülse 45 mit dem Getriebegehäuse 3 verriegelt. In der anderen Endstellung, die in der Fig. 5 mit 44' gekennzeichnet ist, ist die Hülse 45 soweit zurückgezogen, daß die Antriebswelle 17 freigegeben ist. Die Schaltkupplung ist bei Stillstand ohne Last schaltbar. Wird die Antriebswelle 17 über die Schaltkupplung mit dem Gehäuse 3 verriegelt (Endstellung 44' des Schalthebels 44), dann wird bei einer alleinigen Betätigung des Überlagerungsmotors die erforderliche Kriechdrehzahl hervorgerufen, so daß ein zusätzlicher Hilfsantrieb entbehrlich ist. Bei der Verwendung der Schaltkupplung kann der Überlagerungsmotor nicht zum Anfahren des Getriebes benutzt werden.

## Patentansprüche

1. Getriebe mit einem Hauptmotor und einem Überlagerungsmotor für einen Doppelwellenextruder, wobei das Getriebe aus einem Reduktionsgetriebe (1) und einem Verteilergetriebe (2) besteht und das Verteilergetriebe (2) eine erste, über das Reduktionsgetriebe (1) unmittelbar angetriebene Abtriebswelle (4) und eine zweite, über die erste Abtriebswelle (4) und über zwei beidseitig angeordnete Verteilerwellen (11, 12) angetriebene Abtriebswelle (5) aufweist und wobei der Hauptmotor mit fester Drehzahl betrieben wird und auf einen Großteil der Gesamtleistung und der Überlagerungsmotor auf einen Bruchteil von ungefähr 10 % der Gesamtleistung ausgelegt ist, **dadurch gekennzeichnet, daß** das Reduktionsgetriebe (1) als einstufiges Planetengetriebe ausgebildet ist, dessen Sonnenrad (21) über den Hauptmotor und dessen Hohlrad (27) über den Überlagerungsmotorangetrieben ist und dessen Planetenträger (25) mit der ersten Abtriebswelle (4) des Verteilergetriebes (2) verbunden ist und daß der Überlagerungsmotor in der Drehzahl regelbar oder in Stufen verstellbar ist.

2. Getriebe nach Anspruch 1, **dadurch gekennzeichnet, daß** zwischen dem Hauptmotor und dem Sonnenrad (21) des Planetengetriebes eine Stirnradstufe (16) geschaltet ist.

3. Getriebe nach Anspruch 2, **dadurch gekennzeichnet daß** die Stirnradstufe (16) mit einer Leistungsverzweigung versehen ist.

4. Getriebe nach einem der Ansprüche 1 bis 3, **dadurch gekennzeichnet, daß** zwischen dem Überlagerungsmotor und dem Hohlrad (27) ein Überlagerungsgetriebe (29) mit einer Leistungsverzweigung angeordnet ist.

5. Getriebe nach einem der Ansprüche 1 bis 4, **dadurch gekennzeichnet, daß** das Sonnenrad (21) ungelagert und mit der an den Hauptmotor angeschlossenen Antriebswelle (17) oder der Ausgangswelle (20) der Stimradstufe (16) über eine Doppelgelenk-Zahnkupplung (22) verbunden ist.

6. Getriebe nach einem der Ansprüche 1 bis 5, **dadurch gekennzeichnet, daß** die an den Hauptmotor angeschlossene Antriebswelle (17) und die an den Überlagerungsmotor angeschlossene Antriebswelle (30) jeweils mit eine Rücklaufsperre (41, 42) versehen sind.

7. Getriebe nach einem der Ansprüche 1 bis 6, **dadurch gekennzeichnet, daß** an dem Ende der an den Hauptmotor angeschlossenen Antriebswelle (17) eine Schaltkupplung (43, 44, 45) angeordnet, die in einer Endstellung die Antriebswelle (17) mit dem das Getriebe umgebenden Getriebegehäuse (3) verbindet und in der anderen Endstellung die Antriebswelle (17) freigibt.

8. Getriebe nach Anspruch 7, **dadurch gekennzeichnet, daß** die an den Überlagerungsmotor angeschlossene Antriebswelle (30) mit einer Bremse oder einer Rücklaufsperre (42) versehen ist.

9. Getriebe nach einem der Ansprüche 1 bis 8, **dadurch gekennzeichnet, daß** bei alleiniger Betätigung des Übertagerungsmotors die erforderliche Kriechdrehzahl ohne einen zusätzlichen. Hilfsantrieb zu fahren ist.

10. Getriebe nach einem der Ansprüche 1 bis 9, **dadurch gekennzeichnet, daß** das Planetengetriebe einstufig ausgebildet ist und daß der Planetenträger (25) dieses einstufigen Planetengetriebes unmittelbar mit der ersten Abtriebswelle (4) verbunden ist.

## Revendications

1. Transmission pour extrudeuse à vis double avec un moteur principal et un moteur de superposition, cette transmission comprenant un démultiplicateur (1) et une boîte de transfert (2) et ladite boîte de transfert (2) présentant un premier arbre de sortie (4) entraîné directement par l'intermédiaire du démultiplicateur (1) et un second arbre de sortie (5) entraîné par l'intermédiaire du premier arbre de sortie (4) et par l'intermédiaire de deux arbres de transfert (11, 12) disposés de part et d'autre, et le moteur principal fonctionnant à vitesse de rotation fixe et conçu pour fournir une part importante de la puissance totale et le moteur de superposition étant conçu pour fournir une fraction d'environ 10% de la puissance totale, **caractérisée par le fait que** le démultiplicateur (1) se présente sous forme de boîte à train planétaire monoétage, dont la roue planétaire (21) est entraînée par l'intermédiaire du moteur principal et dont la couronne de train planétaire (27) est entraînée par l'intermédiaire du moteur de superposition et dont le porte-satellites (25) est relié au premier arbre de sortie (4) de la boîte de transfert (2), et en ce que la vitesse de rotation du moteur de superposition est susceptible d'être réglée, de façon progressive continue ou par degrés.

2. Transmission selon la revendication 1, **caractérisée par le fait qu'**un étage de pignons cylindriques (16) est monté entre le moteur principal et la roue planétaire (21) de la boîte à train planétaire.

3. Transmission selon la revendication 2, **caractérisée par le fait que** l'étage de pignons cylindriques (16) est muni d'une dérivation de puissance.

4. Transmission selon l'une des revendications 1 à 3, **caractérisée par le fait qu'**une boîte de superposition (29), munie d'une dérivation de puissance, est montée entre le moteur de superposition et la couronne de train planétaire (27).

5. Transmission selon l'une des revendications 1 à 4, **caractérisée par le fait que** la roue planétaire (21) n'est pas montée sur des paliers et **par le fait qu'**elle est reliée à l'arbre primaire (17) raccordé au moteur principal, ou à l'arbre de sortie (20) de l'étage de pignons cylindriques, par l'intermédiaire d'un accouplement à articulation double à denture (22).

6. Transmission selon l'une des revendications 1 à 5, **caractérisée par le fait que** l'arbre primaire (17) relié au moteur principal et l'arbre primaire (30) relié au moteur de superposition sont chacun munis d'un dispositif de blocage d'inversion de marche (41, 42).

7. Transmission selon l'une des revendications 1 à 6, **caractérisée par le fait qu'**à l'extrémité de l'arbre primaire (17) relié au moteur principal est monté un embrayage ou accouplement de manoeuvre (43, 44, 45), qui, en une première position finale, relie l'arbre primaire au carter d'engrenage (3) entourant la transmission et, dans l'autre position finale, libère l'arbre primaire (17).

8. Transmission selon la revendication 7, **caractérisée par le fait que** l'arbre primaire (30) relié au moteur de superposition est muni d'un frein ou d'un dispositif de blocage d'inversion de marche (42).

9. Transmission selon l'une des revendications 1 à 8, **caractérisée par** le fait d'actionner le moteur de superposition seulement permet d'atteindre la vitesse de marche rampante requise, sans avoir recours à un entraînement auxiliaire supplémentaire.

10. Transmission selon l'une des revendications 1 à 9, **caractérisée par le fait que** la boîte à train planétaire est à un seul rapport et que le porte-satellites (25) de cette boîte à train planétaire à un seul rapport est relié directement au premier arbre de sortie (4).

## Claims

1. Transmission with a main motor and a superimposition motor for a twin-shaft extruder, wherein the transmission consists of a reduction gear (1) and distributor gear (2) and the distributor gear (2) comprises a first driven shaft (4) directly driven by way of the reduction gear (1) and a second driven shaft (5) driven by way of the first driven shaft (4) and by way of two distributor shafts (11, 12) arranged at both ends and wherein the main motor is operated at fixed rotational speed and is designed for a major part of the total power output and the superimposition motor is designed for a fraction of approximately 10% of the total power output, **characterised in that** the reduction gear (1) is constructed as a single-stage planetary gear, the sun wheel (21) of which is driven by way of the main motor and the annulus (27) of which is driven by way of the superimposition motor and the planet wheel carrier (25) of which is connected with the first driven shaft (4) of the distributor gear (2) and that the superimposition motor is regulable in rotational speed or adjustable in steps.

2. Transmission according to claim 1, **characterised in that** a spur gearwheel stage (16) is connected between the main motor and the sun wheel (21) of the planetary gear.

3. Transmission according to claim 2, **characterised in that** the spur gearwheel stage (16) is provided with a power splitting.

4. Transmission according to one of claims 1 to 3, **characterised in that** a superimposition gear (29) with a power splitting is arranged between the superimposition motor and the annulus (27).

5. Transmission according to one of claims 1 to 4, **characterised in that** the sun wheel (21) is unmounted and connected with the drive shaft (17), which is connected with the main motor, or the output shaft (20) of the gearwheel stage (16) by way of a double link denture clutch (22).

6. Transmission according to one of claims 1 to 5, **characterised in that** the drive shaft (17) connected to the main motor and the drive shaft (30) connected to the superimposition motor are each provided with a respective reverse motion lock (41, 42).

7. Transmission according to one of claims 1 to 6, **characterised in that** a switch clutch (43, 44, 45) is arranged at the end of the drive shaft (17) connected to the main motor, which clutch in one end setting of the drive shaft (17) connects with the transmission housing (3) enclosing the transmission and in the other end setting frees the drive shaft (17).

8. Transmission according to claim 7, **characterised in that** the drive shaft (30) connected to the superimposition motor is provided with a brake or a return motion lock (42).

9. Transmission according to one of claims 1 to 8, **characterised in that** in the case of sole actuation of the superimposition motor the requisite creep rotational speed is undertaken without an additional auxiliary drive.

10. Transmission according to one of claims 1 to 9, **characterised in that** the planetary gear is constructed to be single staged and that the planet wheel carrier (25) of this single-stage planetary gear is directly connected with the first driven shaft (4).
